# EUROPÄISCHE PATENTSCHRIFT

(11) **EP 3 592 591 B1**
(45) Veröffentlichungstag und Bekanntmachung des Hinweises auf die Patenterteilung: **13.01.2021**
(21) Anmeldenummer: 18706953.9
(22) Anmeldetag: 13.02.2018
(51) Int. Cl.: B60K 6/48, B60K 6/40, B60K 6/387

(54) **HYBRIDMODUL FÜR EINEN ANTRIEBSSTRANG EINES HYBRIDFAHRZEUGS SOWIE EIN SOLCHER ANTRIEBSSTRANG**
HYBRID MODULE FOR A DRIVE TRAIN OF A HYBRID VEHICLE AND SUCH A DRIVE TRAIN
MODULE HYBRIDE POUR CHAÎNE CINÉMATIQUE D'UN VÉHICULE HYBRIDE ET CHAÎNE CINÉMATIQUE

(30) Priorität: 06.03.2017 DE 102017104581; 08.12.2017 DE 102017129280
(43) Veröffentlichungstag der Anmeldung: 15.01.2020
(73) Patentinhaber: Schaeffler Technologies AG & Co. KG, 91074 Herzogenaurach (DE)
(72) Erfinder: BEYER, Robin, 77694 Kehl (DE); PIEPER, Torsten, 76137 Karlsruhe (DE); MEINHARD, Rolf, 77815 Bühl (DE); HOPPE, Marcus, 77855 Achern (DE)
(86) Internationale Anmeldenummer: PCT/DE2018/100120
(87) Internationale Veröffentlichungsnummer: WO 2018/161993

(56) Entgegenhaltungen:
- DE-A1-102014 213 818
- DE-A1-102015 201 931
- DE-A1-102015 211 277
- FR-A1- 2 995 833

## Beschreibung

Die vorliegende Erfindung betrifft ein Hybridmodul für einen Antriebsstrang eines (Hybrid-)Fahrzeugs, wie bspw. ein Pkw, ein Lkw oder ein anderes Nutzfahrzeug, mit einer zur Drehmomentübertragung von einer Verbrennungskraftmaschine und/oder einer Elektromaschine, wie bspw. ein Elektromotor, zu einem Getriebe vorbereiteten / ausgelegten Zwischenwelle, die geometrisch und von der Materialbeschaffenheit so ausgelegt ist, dass sie über zwei (Stütz-)Lager an einer Zwischenwand abstützbar / lagerbar ist. Die Erfindung betrifft auch einen Antriebsstrang für ein (Hybrid-)Fahrzeug, mit einer Verbrennungskraftmaschine, einem Getriebe und einem zwischen der Verbrennungskraftmaschine und dem Getriebe angeordneten Hybridmodul.

Bei aus dem Stand der Technik bekannten Hybridsystemen, bei denen das Hybridmodul zwischen Verbrennungsmaschine und Getriebe angeordnet ist, wird eine Zwischenwelle des Hybridmoduls über eine Lageranordnung in einer Zwischenwand, einem Trägerblech oder etwas ähnlichem gelagert. Ein solches System ist bspw. aus der DE 10 2015 211 436 A1 bekannt. Diese Offenlegungsschrift beschreibt eine Antriebsanordnung mit einem Eingangselement zur Verbindung mit einer Verbrennungskraftmaschine und mit einer elektrischen Maschine, und mit einem Ausgangselement zur Verbindung der Antriebsanordnung mit einer Getriebeeingangswelle eines nachgeordneten Getriebes, wobei als Anfahrelement eine Reibungskupplung vorgesehen ist, welche den Rotor der elektrischen Maschine mit dem Ausgangselement koppelt und mit einer Klauenkupplung, welche die Verbrennungskraftmaschine bei geschlossener Reibungskupplung mit dem Eingangselement der Reibungskupplung koppelt.

In diesem bekannten System ist die Zwischenwelle so ausgeführt, dass motorseitig eine Verbindung zur Trennkupplung (K0-Kupplung) hergestellt werden kann, bspw. über eine Nabe mit Verzahnung. Getriebeseitig ist die Zwischenwelle mit einer Flanschfläche versehen, um eine Verbindung zur Anfahrkupplung (K1-Kupplung) herstellen zu können. Eine solche Anfahrkupplung kann dabei als Einfachkupplung, Doppelkupplung oder Mehrscheibenkupplung ausgeführt sein.

In den bekannten Systemen wird die Zwischenwelle von der Getriebeseite her in die Zwischenwand montiert. Die Trennkupplung wird bspw. mittels einer Welle-Nabe-Verbindung auf der Zwischenwelle angeordnet und von der Motorseite her axial gesichert, bspw. über eine Verschraubung. Alternativ kann die Trennkupplung auch über eine Mutter, einen Sicherungsring oder ähnliche Sicherungselemente axial auf der Zwischenwelle fixiert werden.

Ein Hybridmodul gemäß dem Oberbegriff des Anspruchs 1 ist aus der DE 10 2015 201 931 A1 bekannt.

Nachteilig bei den bekannten Systemen ist, dass sich die axiale Sicherung der motorseitigen Bauteile auf der Motorseite der Zwischenwelle befindet und die axiale Sicherung für getriebeseitige Bauteile getriebeseitig stattfindet. Dadurch ist die Montage sehr komplex und unter Umständen wird Bauraum verschwendet, da zwei Sicherungselemente zur axialen Sicherung der Komponenten auf der Zwischenwelle notwendig sind.

Aufgabe der Erfindung ist es, die Nachteile aus dem Stand der Technik zu vermeiden oder wenigstens zu mildern und insbesondere die axiale Sicherung von sowohl motorseitigen Bauteilen als auch getriebeseitigen Bauteilen, relativ gesehen zur Zwischenwand, getriebeseitig vorzusehen.

Dadurch kann auf eine separate, motorseitig angeordnete axiale Sicherung verzichtet werden.

Die Aufgabe der Erfindung wird bei einem gattungsgemäßen Hybridmodul erfindungsgemäß mit den Merkmalen des Anspruchs 1 gelöst. Ein auf einer Getriebeseite der Zwischenwand vorhandenes Sicherungselement, wie bspw. eine Schraube, eine Mutter und/oder eine Sicherungsbauteilkombination, legt/bestimmt die axiale Position eines auf der Zwischenwelle motorseitig der Zwischenwand anbringbaren Drehmomentübertragungsbauteils, wie bspw. eine Trennkupplung (K0-Kupplung) fest.

Dadurch ergeben sich Vorteile für den Montageprozess, sowohl für den Kupplungshersteller, als auch für den Endkunden. Außerdem können somit Bauraumvorteile erzielt werden, da Bauteile, wie z.B. Nabe, Verbindungselemente, etc., entfallen und die Bauteile besser verschachtelt werden können.

Vorteilhafte Ausführungsformen sind in den Unteransprüchen beansprucht und werden nachfolgend erläutert.

So ist es von Vorteil, wenn das Hybridmodul über die zwei (Stütz-)Lager an der Zwischenwand gelagert / abgestützt ist.

Die beiden Lager werden hierbei ebenfalls von der Getriebeseite aus auf die Zwischenwelle aufgeschoben.

Erfindungsgemäß ist es von Vorteil, dass ein bzgl. der Zwischenwand auf der Getriebeseite angeordnetes Schwungrad, welches drehmomentübertragend an der Zwischenwelle angebunden ist, durch das Sicherungselement axial festgelegt ist.

Das Schwungrad kann hierbei Teil einer getriebeseitig angeordneten Anfahrkupplung (K1-Kupplung) sein. Durch die Festlegung des Schwungrads auf der Zwischenwelle kann auf eine separate Anbindung der K1-Kupplung an das die Zwischenwelle verzichtet werden. Dadurch ist eine kompaktere Bauweise möglich.

Dabei hat es sich als vorteilhaft herausgestellt, dass das Schwungrad erfindungsgemäß einen Flanschabschnitt aufweist, welcher zwischen einem, vorzugsweise getriebenäheren, der (Stütz-)Lager und der Zwischenwelle angeordnet ist. Somit trägt das getriebeseitige Schwungrad eines der Lager und ist am Innendurchmesser über eine Schnittstelle bzw. Verbindung, z.B., Verzahnung, zur Zwischenwelle versehen.

Hierbei ist es von Vorteil, wenn der Flanschabschnitt des Schwungrads zwischen einem Innenring des, vorzugsweise getriebenäheren, bspw. als Wälzlager ausgelegten, (Stütz-) Lagers und einer Außenseite der Zwischenwelle angeordnet ist.

Bei der Ausgestaltung des Flanschabschnitts hat es sich als vorteilhaft herausgestellt, wenn eine motorseitige Stirnfläche des Flanschabschnitts mit vorzugsweise einer Seitenfläche / Stirnseite eines Innenrings des anderen, vorzugsweise motornäheren, (Stütz-)Lagers in Kontakt ist.

Dadurch wird das motornähere Stützlager über den Flanschabschnitt des Schwungrades von einer Seite axial positioniert.

Hierbei ist es von Vorteil, wenn der Außendurchmesser der Zwischenwelle von der Motorseite zur Getriebeseite hin im Wesentlichen, vorzugsweise stufenweise, abnimmt.

Ferner ist es von Vorteil, wenn die Zwischenwelle motorseitig einen flanschartigen radialen Vorsprung aufweist, welcher vorzugsweise einteilig mit der Zwischenwelle ausgebildet ist.

Dieser Vorsprung kann zur Befestigung eines Trägerelements, bspw. ein Trägerblech mit Riemenspur bei achsparallelen Hybridsystemen oder einem Rotorträger bei koaxialen Hybridsystemen, dienen. Darüber hinaus dient der Vorsprung als Anschlag bzw. Begrenzung zur axialen Positionierung des motornäheren Stützlagers von der anderen Seite her.

Hierbei hat es sich bewährt, dass der Außendurchmesser der Zwischenwelle insbesondere ab dem flanschartigen radialen Vorsprung, der bspw. an Anschlagsfläche dienen kann, in Richtung zur Getriebeseite hin abnimmt. Motorseitig des flanschartigen Vorsprungs kann der Durchmesser der Zwischenwelle derart angepasst sein, dass dieser Teil der Zwischenwelle zur Anbringung weiterer (motorseitig) auf der Zwischenwelle angeordneter Bauteile dienen kann.

Hierbei ist es von Vorteil, wenn der Vorsprung als Verbindung zu bzw. zur Befestigung einer Trennkupplung (K0-Kupplung) dient.

Ferner betrifft die Erfindung auch einen Antriebsstrang für ein (Hybrid-)Fahrzeug, mit einer Verbrennungskraftmaschine, einem Getriebe und einem zwischen der Verbrennungskraftmaschine und dem Getriebe angeordneten erfindungsgemäßen Hybridmodul.

Mit anderen Worten besteht die Erfindung darin, dass die axiale Sicherung (Schraube) von der Motorseite auf die Getriebeseite der Zwischenwelle verlagert wurde. Das getriebeseitige Schwungrad trägt eines der Lager und besitzt am Innendurchmesser eine Schnittstelle bzw. Verbindung (Verzahnung) zur Zwischenwelle. Die Zwischenwelle selbst ist gegenüber dem bekannten Stand der Technik quasi gespiegelt. Die Flanschfläche der Zwischenwelle dient als Verbindung zum Innenlamellenträger (Trägerblech mit Riemenspur). Auf der Zwischenwelle sitzt ein weiteres Lager. Die Ausführungsform ist sowohl für achsparallele wie auch für koaxiale Hybridsysteme, sogenannte P2-Hybridsysteme, verwendbar.

Mit anderen Worten ist die Trennkupplung (K0-Kupplung) auf der Zwischenwelle von einer Seite des Getriebes axial festgelegt. Ein Schwungrad auf der Getriebeseite lagert / stützt ein Lager und weist an einem Innendurchmesser einen Flanschabschnitt auf, um das Schwungrad mit der Zwischenwelle zu koppeln. Ein Flanschabschnitt der Zwischenwelle verbindet diese mit einem Innenlamellenträger bzw. einer Trägerplatte mit einer Riemenspur. Ein weiteres Lager ist auf der Zwischenwelle angeordnet. Diese Anordnung kann in achsparallelen oder koaxialen Hybridsystemen verwendet werden.

Die Erfindung wird nachfolgend mit Hilfe von Figuren näher erläutert, in denen unterschiedliche Ausführungsformen dargestellt sind. Es zeigen:
- Fig. 1: eine Schnittansicht eines erfindungsgemäßen Hybridmoduls mit teilweiser Darstellung der Motor- und Getriebeanbindung;
- Fig. 2: einen erfindungsgemäßen Aufbau eines Hybridmoduls in Schnittdarstellung;
- Fig. 3: eine mehrteilige Ausführungsform eines Innenlamellenträgers mit einem Trägerblech mit Riemenspur für P2-Hybridsysteme;
- Fig. 4: das Trägerelement aus Fig. 3 im zusammengesteckten Zustand;
- Fig. 5: das Trägerelement aus Fig. 3 und Fig. 4 im gefügten Zustand;
- Fig. 6: ein Detailausschnitt VI aus Fig. 5;
- Fig. 7: eine perspektivische Ansicht des Innenlamellenträgers in einer anderen Ausführungsform; und
- Fig. 8: eine Schnittdarstellung der in Fig. 7 gezeigten Ausführungsform des Innenlamellenträgers.

Die Figuren sind lediglich schematischer Natur und dienen nur dem Verständnis der Erfindung. Die gleichen Elemente sind mit denselben Bezugszeichen versehen.

Merkmale der einzelnen Ausführungsbeispiele können auch in anderen Ausführungsbeispielen realisiert werden. Sie sind also untereinander austauschbar.

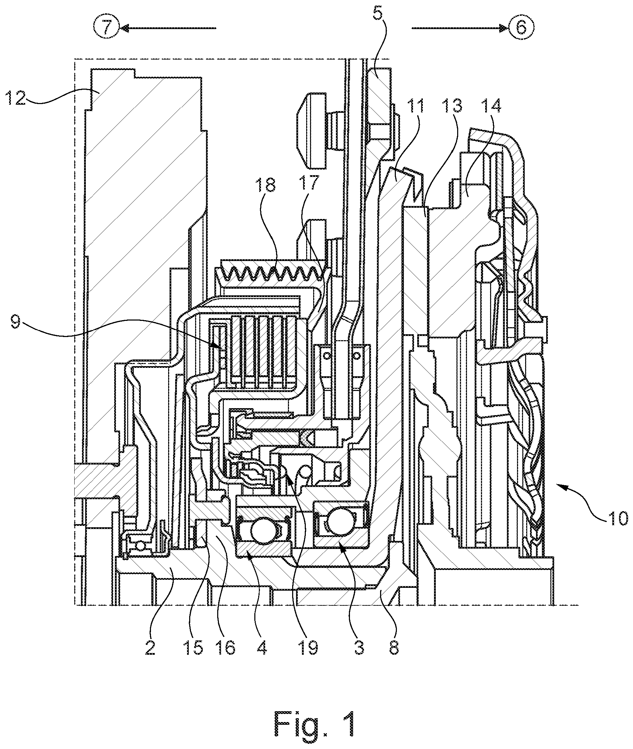

Fig. 1 zeigt eine Schnittdarstellung eines Hybridmoduls 1, welches als sogenanntes P2-Hybridmodul ausgebildet ist. Unter einem P2-Hybridmodul wird ein Hybridmodul verstanden, welches in einem Antriebsstrang für ein Fahrzeug zwischen einer Verbrennungskraftmaschine (in Fig. 1 nach links) und einem Getriebe (in Fig. 1 nach rechts) angeordnet ist.

Das Hybridmodul 1 weist eine Zwischenwelle 2 auf, die über zwei (Stütz-)Lager 3, 4 an einer Zwischenwand 5 gelagert ist. Bezogen auf die Zwischenwand wird zwischen einer Getriebeseite 6 (in Fig. 1 rechts der Zwischenwand 5) und eine Motorseite 7 (in Fig. 1 links der Zwischenwand 5) der Zwischenwelle 2 unterschieden.

Motorseitig der Zwischenwand 5 ist eine Trennkupplung (K0-Kupplung) 9 angeordnet, die dazu dient, entweder eine Verbrennungskraftmaschine oder eine elektrische Maschine drehmomentübertragend mit der Zwischenwelle 2 zu verbinden. Getriebeseitig ist eine Anfahrkupplung (K1-Kupplung) 9 angeordnet, die über ein Schwungrad 10 mit der Zwischenwelle 2 drehmomentübertragend verbunden ist. Die auf der Zwischenwelle 2 angeordneten Komponenten, wie unter anderem die Anfahrkupplung 9 oder das Schwungrad 10, werden über ein Sicherungselement 8, von der Getriebeseite 6 aus axial positioniert.

Linksseitig der Zwischenwelle 2 ist ferner ein Zweimassenschwungrad 12 dargestellt, welches zur Dämpfung der Schwingungen und Vibrationen von der Verbrennungskraftmaschine dient. Rechtsseitig der Zwischenwelle 2 ist die Anfahrkupplung 10 dargestellt, welche das Schwungrad 11 sowie unter anderem eine Kupplungsscheibe 13 und eine Kupplungsdruckplatte 14 aufweist. Die Anfahrkupplung 10 dient zur Drehmomentübertragung bzw. zur Unterbrechung der Drehmomentübertragung von der Zwischenwelle 2 zum Getriebe (nicht dargestellt).

Die Trennkupplung 9 ist auf der Zwischenwelle 2 angeordnet und über einen Innenlamellenträger 15 an einem flanschartigen radialen Vorsprung 16 der Zwischenwelle 2 befestigt. Der Innenlamellenträger 15 ist in der hier dargestellten Ausführungsform als ein Trägerblech 17 mit einer Riemenspur 18 ausgeführt, welches das Drehmoment der elektrischen Maschine, bspw. ein Elektromotor (hier nicht gezeigt) über die Trennkupplung 9 ggf. auf die Zwischenwelle 2 überträgt.

Eine solche Ausführung wird insbesondere für achsparallele Hybridanordnungen bevorzugt. Alternativ ist statt der Riemenspur 18 auch die Befestigung eines Rotorträgers für den Rotor der elektrischen Maschine denkbar. Diese Ausführung wird insbesondere für koaxiale Hybridsysteme bevorzugt.

Die Trennkupplung 9 ist hier als eine "normally-closed"-Kupplung dargestellt, was bedeutet, dass die Trennkupplung im unbetätigten Zustand geschlossen ist und somit mit der Verbrennungskraftmaschine drehmomentübertragend verbunden ist. Durch ein Betätigen einer Ausrückeinrichtung 19 wird die Trennkupplung 9 geöffnet und somit mit dem Elektromotor drehmomentübertragend verbunden.

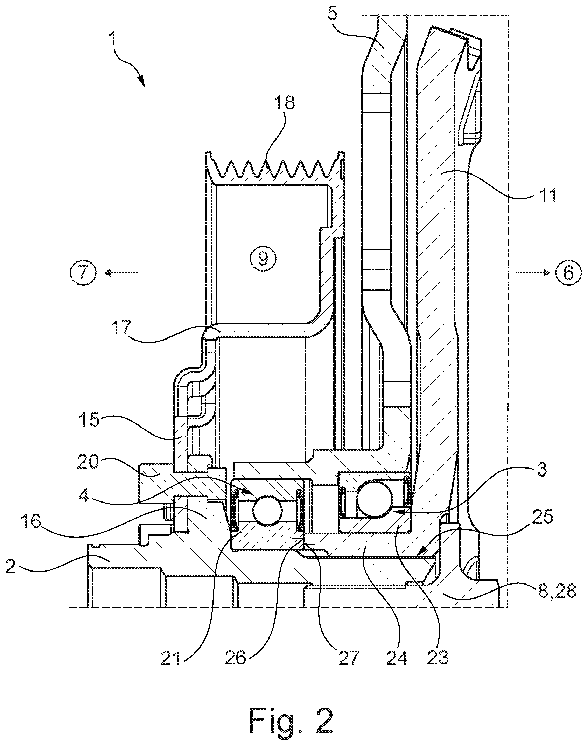

Die genaue Anordnung und Positionierung der Komponenten auf der Zwischenwelle 2 wird nachfolgend anhand von Fig. 2 detailliert beschrieben.

Fig. 2 zeigt das Hybridmodul 1, welches in Fig. 1 zwischen der Verbrennungskraftmaschine (linksseitig in Fig. 1, nicht dargestellt) und dem Getriebe (rechtsseitig in Fig. 1, nicht dargestellt) angeordnet ist. Um die Darstellung der für die Erfindung wesentlichen Komponenten zu vereinfachen, ist in Fig. 2 auf die Darstellung der Trennkupplung 9 sowie der Anfahrkupplung 10, mit Ausnahme des Schwungrades 11, verzichtet worden. Von der Trennkupplung 9 ist lediglich der Innenlamellenträger 15 in Form des Trägerbleches 17 mit Riemenspur 18 abgebildet.

Die Zwischenwelle 2 weist einen im Wesentlichen von der Motorseite 7 zur Getriebeseite 6 hin abnehmenden Außendurchmesser auf, mit Ausnahme des flanschartigen radial nach außen abstehenden Vorsprung 16, welcher bzgl. der Zwischenwand 5 motorseitig auf der Zwischenwelle 2 angeordnet ist. Die Zwischenwelle 2 und der Vorsprung 16 sind hierbei einteilig ausgebildet. Der flanschartige Vorsprung 16 dient zum einen zur Befestigung des bzw. zur Verbindung zum Innenlamellenträger(s) 15, der in dem hier gezeigten Ausführungsbeispiel mithilfe eines Niets 20 an dem Vorsprung 16 befestigt ist. Alternativ ist statt des Niets 20 auch ein anderes Verbindungselement, wie bspw. eine Schraube etc. denkbar. Zum anderen dient der Flanschartige Vorsprung 16 als Anschlagsfläche für einen Innenring 21 des motornäheren Lagers 4, welche die Bewegung in Axialrichtung des Innenrings 21 beim Aufschieben auf die Zwischenwelle 2 in eine Richtung (in Fig. 2 nach links) begrenzt.

Die Lager 3, 4 sind hier als Wälzlager, genauer gesagt als Kugellager, ausgebildet. Jedoch sind auch andere Wälzlagerarten, wie bspw. Rollenlager etc. denkbar. Die beiden Lager 3, 4 stützen die Zwischenwelle 2 an der Zwischenwand 5 ab bzw. lagern die Zwischenwelle 2 an/in der Zwischenwand 5. Das (Stütz-)Lager 3 ist hier als ein Schrägkugellager ausgebildet und mit seinem Außenring 22 seitlich in Kontakt mit (einem Vorsprung) der Zwischenwand 5. Ein Innenring 23 des getriebenäheren Lagers 3 ist auf einem Flanschabschnitt 24 des Schwungrades 11 angeordnet bzw. aufgeschoben. Dabei liegt eine Seitenfläche des Innenrings 23 an dem Schwungrad 11 an.

Der Flanschabschnitt 24 des Schwungrades 11 erstreckt sich in Axialrichtung von dem Schwungrad 11 in Fig. 2 nach links (von der Anfahrkupplung 10 weg) und weist an seinem Innendurchmesser eine Schnittstelle bzw. Verbindung 25 auf, mittels derer das Schwungrad 11 drehmomentübertragend mit der Zwischenwelle 2 verbunden ist. Die Schnittstelle 25 ist bspw. in Form einer Welle-Nabe-Verbindung ausgebildet. Dadurch ist die Zwischenwelle 2 - mit dazwischen eingeschobenem / angeordnetem Flanschabschnitt 24 - über das Lager 3 in/an der Zwischenwand 5 abgestützt.

Darüber hinaus dient der Flanschabschnitt 24 zur axialen Festlegung bzw. Positionierung des Innenrings 21 des motornäheren Lagers 4, indem eine motorseitige Stirnfläche 26 des Flanschabschnitts 24 an einer getriebeseitigen Seitenfläche 27 des Innenrings 21 anliegt.

Die auf der Zwischenwelle 2 angeordneten Komponenten, wie u.a. die Lager 3, 4, die Trennkupplung 9 (siehe Fig. 1) und das Schwungrad 11 werden getriebeseitig über das Sicherungselement 8, hier in Form einer Schraube 28, axial bestimmt positioniert.

Alternativ sind als Sicherungselement auch eine Mutter, ein Sicherungsring oder ähnliche Sicherungselemente sowie eine Kombination aus mehreren Elementen, eine sogenannte Sicherungselementkombination, denkbar.

Durch die hier gezeigte Ausgestaltung der Zwischenwelle 2 und der Anordnung der Komponenten, ist es möglich, sowohl die Komponenten auf der Motorseite 7 (d.h. links der Zwischenwand 5) als auch auf der Getriebeseite 6 (d.h. rechts der Zwischenwand 5) mit nur einem Sicherungselement 8 von der Getriebeseite 6 her axial zu sichern bzw. zu positionieren.

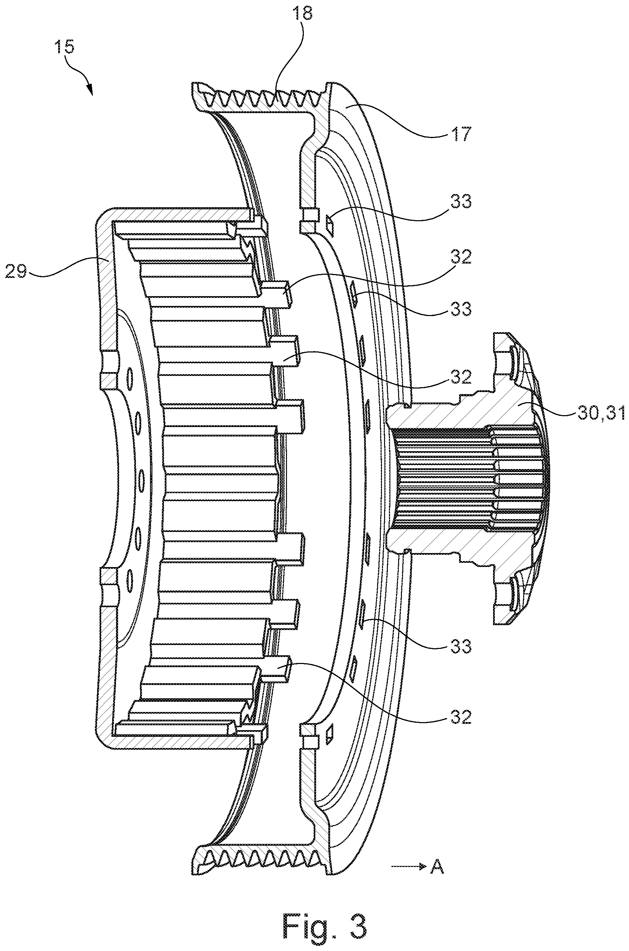

Fig. 3 bis Fig. 8 zeigen verschiedene Ausführungsformen für den Innenlamellenträger 15.

Der Innenlamellenträger 15 dient u.a. zum Zentrieren und Führen der Lamellen (nicht dargestellt), zum Übertragen des Drehmoments der Verbrennungskraftmaschine, zum Übertragen des Drehmoments der elektrischen Maschine, sowie zum Bereitstellen einer Schnittstelle zur Zwischenwelle und zur elektrischen Maschine, wie bspw. ein Elektromotor.

Der Innenlamellenträger 15 ist in den Figuren 3 bis 8 mehrteilig ausgeführt. Durch diese mehrteilige Ausführung ist es möglich, die komplexe Geometrie des Innenlamellenträgers 15 mit weniger Umformschritten herzustellen. Darüber hinaus werden Freiheitsgrade hinsichtlich Materialstärkenunterschiede, Werkstoffauswahl und Wärmebehandlung der einzelnen Komponenten möglich.

Der Innenlamellenträger 15 in der hier gezeigten beispielhaften Ausführungsform weist einen Innenkorb 29, das Trägerblech 17 mit der Riemenspur 18 und ein Verbindungselement 30 zur Zwischenwelle 2 auf, welches hier in Form einer Nabe 31 ausgebildet ist. Insbesondere auf das Verbindungselement 30 kann auch verzichtet werden, wenn der Innenlamellenträger 15 auf andere Weise, wie bspw. in Fig. 2 gezeigt, mit der Zwischenwelle 2 verbunden wird.

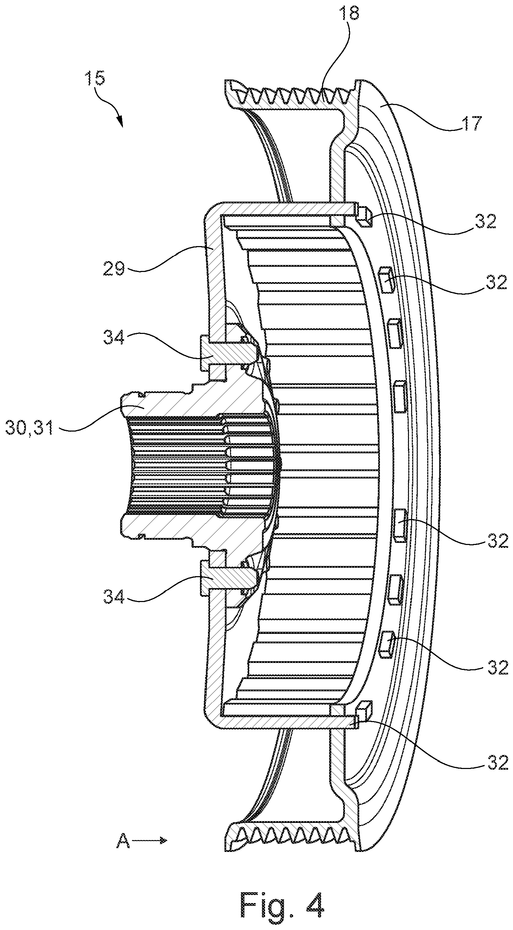

Der Innenkorb 29 weist mehrere Finger 32 auf, die sich entlang der Umfangsrichtung des Innenkorbs 29 in einer Axialrichtung A in Fig. 3 erstrecken. Das Trägerblech 17 weist dazu korrespondierende entlang Umfangsrichtung angeordnete Fenster/Ausnehmungen/Öffnungen 33 auf, in die die Finger 32 bei der Montage eingreifen (siehe Fig. 4). Die Nabe 31 wird bspw. mit Hilfe von mehreren entlang der Umfangsrichtung der Nabe 31 angeordneten Schrauben 34 (siehe Fig. 4) an dem Innenkorb 29 befestigt.

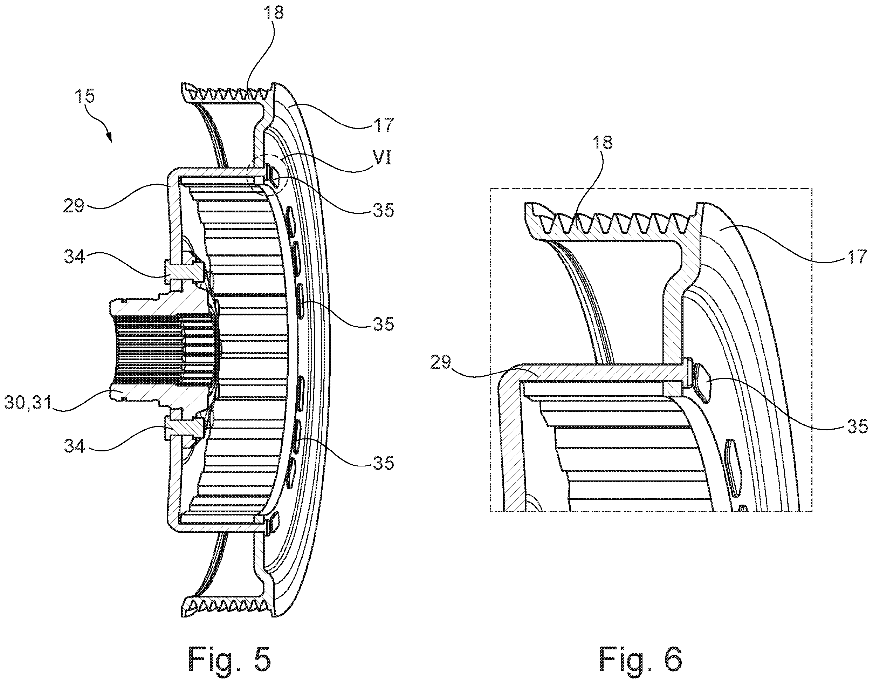

Nach dem Durchstecken der Finger 32 durch die jeweils dazu korrespondierenden Fenster 33 (siehe Fig. 4) stehen die Finger 32 in Axialrichtung aus den Fenstern 33 hervor und werden mit Hilfe eines Umformvorgangs, z.B., Rollieren oder Prägen, derart umgeformt, dass der Innenkorb 29 und das Trägerblech 17 untrennbar verbunden sind. Wie in Fig. 5 gezeigt, kann ein solcher Umformvorgang die Enden der Finger 32, welche durch die Fenster 33 hindurchreichen, zu Schließköpfen 35 umformen. Auf diese Weise entsteht eine formschlüssige Verbindung ähnlich einer Vernietung, wobei jedoch auf zusätzliche Verbindungselemente, wie Niete, verzichtet wird.

Fig. 6 zeigt die formschlüssige Verbindung mit Hilfe der Schließköpfe 35 nochmals in einer vergrößerten Darstellung. Durch diese Art der Verbindung zwischen dem Innenkorb 29 und dem Trägerblech 17 kann auf überlappende Geometrien, wie sie für Schaub- oder Nietverbindungen benötigt werden, verzichtet werden, wodurch eine kompakte Ausführung und somit eine Bauraumreduzierung ermöglicht ist. Gegenüber einer Schweißverbindung besitzt eine solche formschlüssige Verbindung keinen Schweißverzug und keine Einschränkung hinsichtlich des Werkstoffes.

Als alternative Verbindungsart sind auch Verstemmungen denkbar, wie sie bspw. zur Verbindung von Nabe und Nabenflansch bei Kupplungsscheiben bereits bekannt sind.

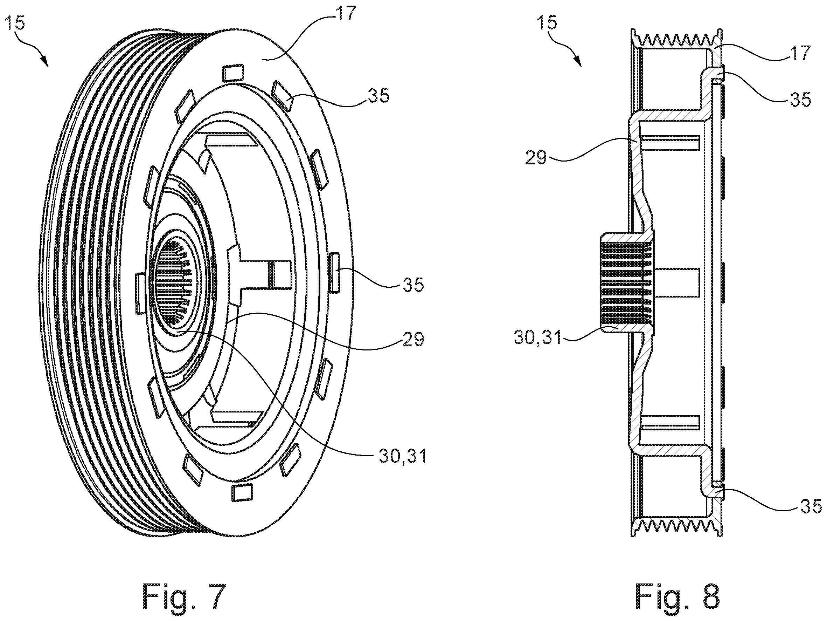

Fig. 7 und Fig. 8 zeigen eine andere, weitere Ausführungsform des Innenlamellenträgers 15, bei der das Verbindungselement 30 in Form der Nabe 31 und der Innenkorb 29 einteilig ausgeführt sind. Hierbei wird der Bereich der Nabe 31, ähnlich einer Schmiedenabe ausgeführt, und aus dem Innenkorb 29 tiefgezogen.

Durch die mehrteilige Ausführung des Innenlamellenträgers 15 können die einzelnen Komponenten aus unterschiedlichen Materialien und/oder verschiedenen Materialdicken hergestellt werden. Eine vorteilhafte Kombination stellt hierbei bspw. folgende Anordnung dar: Das Drehmomenteinleitungselement ist in Form einer Nabe 31 aus, z.B., Schmiedestahl oder Gusswerkstoff hergestellt. Der Innenkorb 29 ist aus Blech mit einer Verzahnung für die Lamellen hergestellt und das Trägerblech 17 mit der Riemenspur 18 (als eine Art Riemenscheibe) ist ebenfalls aus Blech, jedoch mit abweichender Blechstärke hergestellt. Die Verbindungsstelle zwischen der Nabe 31 und dem Innenkorb 29 wird über Niete realisiert, wohingegen die Verbindungsstelle zwischen dem Innenkorb 29 und dem Trägerblech 17 über das beschriebene Umformverfahren, bspw. in Form von Rollierung, umgesetzt ist.

### Bezugszeichenliste

- 1: Hybridmodul
- 2: Zwischenwelle
- 3: (Stütz-)Lager
- 4: (Stütz-)Lager
- 5: Zwischenwand
- 6: Getriebeseite
- 7: Motorseite
- 8: Sicherungselement
- 9: Trennkupplung (K0-Kupplung)
- 10: Anfahrkupplung (K1-Kupplung)
- 11: Schwungrad
- 12: Zweimassenschwungrad (ZMS)
- 13: Kupplungsscheibe
- 14: Kupplungsdruckplatte
- 15: Innenlamellenträger
- 16: flanschartiger radialer Vorsprung
- 17: Trägerblech
- 18: Riemenspur
- 19: Ausrückeinrichtung
- 20: Niet
- 21: Innenring
- 22: Außenring
- 23: Innenring
- 24: Flanschabschnitt
- 25: Schnittstelle / Verbindung
- 26: Stirnfläche
- 27: Seitenfläche
- 28: Schraube
- 29: Innenkorb
- 30: Verbindungselement
- 31: Nabe
- 32: Finger
- 33: Fenster / Ausnehmung / Öffnung
- 34: Schraube
- 35: Schließkopf

- A: Axialrichtung

## Patentansprüche

1. Hybridmodul (1) für einen Antriebsstrang eines Fahrzeugs, mit einer zur Drehmomentübertragung von einer Verbrennungskraftmaschine und/oder einer elektrischen Maschine zu einem Getriebe vorbereiteten Zwischenwelle (2), die über zwei Lager (3, 4) an einer Zwischenwand (5) gelagert ist, wobei ein auf einer Getriebeseite (6) der Zwischenwand (5) vorhandenes Sicherungselement (8) die axiale Position eines auf der Zwischenwelle (2) motorseitig der Zwischenwand (5) anbringbaren Drehmomentübertragungsbauteils (9) festlegt, **dadurch gekennzeichnet, dass** ein bzgl. der Zwischenwand (5) auf der Getriebeseite (6) angeordnetes Schwungrad (11), welches drehmomentübertragend an der Zwischenwelle (2) angebunden ist, durch das Sicherungselement (8) axial festgelegt ist und das Schwungrad (11) einen Flanschabschnitt (24) aufweist, welcher zwischen einem der Lager (3) und der Zwischenwelle (2) angeordnet ist.

2. Hybridmodul (1) gemäß Anspruch 1, **dadurch gekennzeichnet, dass** das Hybridmodul (1) über die zwei Lager (3, 4) an der Zwischenwand (5) gelagert ist.

3. Hybridmodul (1) gemäß Anspruch 1, **dadurch gekennzeichnet, dass** der Flanschabschnitt (24) des Schwungrads (11) zwischen einem Innenring (23) des einen Lagers (3) und einer Außenseite der Zwischenwelle (2) angeordnet ist.

4. Hybridmodul (1) gemäß Anspruch 1 oder 3, **dadurch gekennzeichnet, dass** eine motorseitige Stirnfläche (26) des Flanschabschnitts (24) mit einer Seitenfläche (27) eines Innenrings (21) des anderen Lagers (4) in Kontakt ist.

5. Hybridmodul (1) gemäß einem der Ansprüche 1 bis 4, **dadurch gekennzeichnet, dass** ein Außendurchmesser der Zwischenwelle (2) von der Motorseite (7) zur Getriebeseite (6) hin im Wesentlichen abnimmt.

6. Hybridmodul (1) gemäß einem der Ansprüche 1 bis 5, **dadurch gekennzeichnet, dass** die Zwischenwelle (2) motorseitig einen flanschartigen radialen Vorsprung (16) aufweist, welcher einteilig mit der Zwischenwelle (2) ausgebildet ist.

7. Hybridmodul (1) gemäß Anspruch 6, **dadurch gekennzeichnet, dass** der Vorsprung (16) als Verbindung zu einer Trennkupplung (9) dient.

8. Antriebsstrang für ein Fahrzeug, mit einer Verbrennungskraftmaschine, einem Getriebe und einem zwischen der Verbrennungskraftmaschine und dem Getriebe angeordneten Hybridmodul (1) nach einem der vorhergehenden Ansprüche.

## Claims

1. A hybrid module (1) for a drive train of a vehicle, having an intermediate shaft (2) which is prepared for torque transmission from an internal combustion engine and/or an electric machine to a transmission and which is mounted on an intermediate wall (5) by means of two bearings (3, 4), wherein a securing element (8) present on a transmission side (6) of the intermediate wall (5) defines the axial position of a torque transmission component (9) which can be attached to the intermediate shaft (2) on the motor side of the intermediate wall (5), **characterised in that** a flywheel (11) which is arranged on the transmission side (6) with respect to the intermediate wall (5) and which is connected to the intermediate shaft (2) in a torque-transmitting manner is axially fixed by the securing element (8), and the flywheel (11) has a flange portion (24) which is arranged between one of the bearings (3) and the intermediate shaft (2).

2. The hybrid module (1) according to claim 1, **characterised in that** the hybrid module (1) is mounted on the intermediate wall (5) by means of the two bearings (3, 4).

3. The hybrid module (1) according to claim 1, **characterised in that** the flange portion (24) of the flywheel (11) is arranged between an inner ring (23) of the one bearing (3) and an outer side of the intermediate shaft (2).

4. The hybrid module (1) according to claim 1 or 3, **characterised in that** a motor-side end face (26) of the flange portion (24) is in contact with a side face (27) of an inner ring (21) of the other bearing (4).

5. The hybrid module (1) according to one of claims 1 to 4, **characterised in that** an outer diameter of the intermediate shaft (2) substantially decreases from the motor side (7) to the transmission side (6).

6. The hybrid module (1) according to one of claims 1 to 5, **characterised in that** the intermediate shaft (2) has a flange-like radial projection (16) on the motor side, which is integrally formed with the intermediate shaft (2).

7. The hybrid module (1) according to claim 6, **characterised in that** the projection (16) is used as a connection to a separating clutch (9).

8. A drive train for a vehicle, having an internal combustion engine, a transmission and a hybrid module (1) arranged between the internal combustion engine and the transmission according to one of the preceding claims.

## Revendications

1. Module hybride (1) pour une chaîne cinématique d un véhicule, comprenant un arbre intermédiaire (2) préparé pour la transmission du couple d un moteur à combustion interne et/ou d une machine électrique à une boîte de vitesse, lequel arbre est monté au moyen des deux paliers (3, 4) sur une paroi intermédiaire (5), dans lequel un élément de fixation (8) présent sur la paroi intermédiaire (5) côté boîte de vitesse (6) définit la position axiale d un composant de transmission du couple (9) pouvant être fixé à 1 arbre intermédiaire (2) côté moteur de la paroi intermédiaire (5), **caractérisé en ce qu** un volant d inertie (11), disposé, par rapport à la paroi intermédiaire (5), côté boîte de vitesse (6), ledit volant étant relié à 1 arbre intermédiaire (2) de manière à transmettre le couple, est fixé, au moyen de 1 élément de fixation (8), dans le sens axial et que le volant d inertie (11) comporte une section de bride (24), laquelle est disposée entre 1 un des paliers (3) et 1 arbre intermédiaire (2).

2. Module hybride (1) selon la revendication 1, **caractérisé en ce que** ledit module hybride (1) est monté, au moyen des deux paliers (3, 4), sur la paroi intermédiaire (5).

3. Module hybride (1) selon la revendication 1, **caractérisé en ce que** la section de bride (24) du volant d inertie (11) est disposée entre une bague intérieure (23) dudit un palier (3) et un côté extérieur de 1 arbre intermédiaire (2).

4. Module hybride (1) selon la revendication 1 ou 3, **caractérisé en ce qu** une face avant (26) côté moteur de la section de bride (24) est en contact avec une face latérale (27) d une bague intérieure (21) de 1 autre palier (4).

5. Module hybride (1) selon 1 une quelconque des revendications 1 à 4, **caractérisé en ce qu** un diamètre extérieur de 1 arbre intermédiaire (2) diminue essentiellement du côté moteur (7) au côté boîte de vitesses (6).

6. Module hybride (1) selon 1 une quelconque des revendications 1 à 5, **caractérisé en ce que** 1 arbre intermédiaire (2) comporte une saillie (16) radiale en forme de bride côté moteur, laquelle est formée d une seule pièce avec 1 arbre intermédiaire (2).

7. Module hybride (1) selon la revendication 6, **caractérisé en ce que** la saillie (16) sert de liaison à un embrayage de coupure (9).

8. Chaîne cinématique pour un véhicule, comprenant un moteur à combustion interne, une boîte de vitesses et un module hybride (1) selon 1 une quelconque des revendications précédentes disposé entre le moteur à combustion interne et la boîte de vitesses.
